# EUROPÄISCHE PATENTSCHRIFT

(11) **EP 3 939 816 B1**
(45) Veröffentlichungstag und Bekanntmachung des Hinweises auf die Patenterteilung: **03.05.2023**
(21) Anmeldenummer: 20185666.3
(22) Anmeldetag: 14.07.2020
(51) Int. Cl.: B60K 1/00, B60K 15/03

(54) **HYBRIDFAHRZEUG MIT EINER TANKVORRICHTUNG**
HYBRID VEHICLE WITH A TANK DEVICE
VÉHICULE HYBRIDE DOTÉ D'UN DISPOSITIF DE RÉSERVOIR

(43) Veröffentlichungstag der Anmeldung: 19.01.2022
(73) Patentinhaber: Magna Energy Storage Systems GesmbH, 8261 Sinabelkirchen (AT)
(72) Erfinder: STIENDL, Gregor, 8181 St. Ruprecht (AT); BAUER, Manuel, 8010 Graz (AT)
(74) Vertreter: Zangger, Bernd

(56) Entgegenhaltungen:
- DE-A1-102010 009 875
- DE-A1-102016 104 820
- DE-A1-102019 107 041

## Beschreibung

### Gebiet der Erfindung

Die vorliegende Erfindung betrifft ein Hybridfahrzeug mit einer Tankvorrichtung.

### Stand der Technik

Es ist bekannt, dass Hybridfahrzeuge einen elektrischen Antrieb und einen Verbrennungsmotor als zusätzlichen Antrieb umfassen können. Die Energie für den elektrischen Antrieb kann in einem Energiespeicher, also in einer Batterie beziehungsweise einem Akkumulator, bereitgehalten werden. Der für den Verbrennungsmotor erforderliche Kraftstoff kann in einem Tank gespeichert sein.

Insbesondere bei Hybridfahrzeugen die auch rein elektrisch betrieben werden können, besteht das Problem, dass unter Umständen der Verbrennungsmotor und daher der Tank des Hybridfahrzeuges längere Zeit lang nicht benutzt wird. Ein Kraftstoff im Tank kann auch wenn dieser nicht benutzt wird, weiterhin ausgasen und somit den Druck im Tank erhöhen. Insbesondere wenn eine Entlüftung eines solchen nicht benutzter Tanks nicht möglich ist, kann sich in einem solchen Tank ein hoher Druck aufbauen, beispielsweise von über 300 mbar. Der Tank muss dann mit geeigneten Maßnahmen, wie Verstärkungen, entsprechend druckstabil ausgebildet werden.

Aus der DE 10 2010 009875 A1 ist ein Kraftfahrzeug bekannt, mit einem Aufbau und einem Antriebsstrang, wobei der Antriebsstrang eine Vorderachse, eine Hinterachse, ein Antriebsaggregat und ein Getriebe umfasst, wobei das Antriebsaggregat als Hybridantrieb mit einer Brennkraftmaschine und mindestens einer elektrischen Maschine ausgebildet ist, wobei die Brennkraftmaschine ausgehend von mindestens einem Kraftstoffstank mit Kraftstoff versorgbar ist, und wobei die oder jede elektrische Maschine im motorischen Betrieb ausgehend von mindestens einem elektrischen Energiespeicher mit elektrischer Energie versorgbar ist, wobei der oder jeder Kraftstoffstank und der oder jeder elektrische Energiespeicher in einem gemeinsamen Abschnitt des Aufbaus positioniert sind. Vorzugsweise sind der oder jeder Kraftstofftank und der oder jeder elektrische Energiespeicher gemeinsam kühlbar.

Die DE 10 2019 107041 A1 offenbart ein Fahrzeugsystem, folgendes umfassend: einen Kühlkreislauf, der eine Pumpe oder einen Verdichter beinhaltet; einen Speichertank für gasförmigen Kraftstoff, der in Wärmekommunikation mit dem Kühlkreislauf steht; und eine Steuerung, die in einem nichtflüchtigen Speicher gespeicherte ausführbare Anweisungen beinhaltet, um den Tank für gasförmigen Kraftstoff über den Kühlkreislauf als Reaktion auf Abfüllen des Tanks für gasförmigen Kraftstoff zu kühlen.

Aus der DE 10 2016 104820 A1 ist eine Kraftstofftankstruktur bekannt, aufweisend einen Kraftstofftank, der in einem Automobil installiert ist, und der Kraftstoff aufnimmt; ein beutelförmiges Element, das an einem Deckenabschnitt eines Innenraums des Kraftstofftanks befestigt ist, wobei ein Kontaktzustand des beutelförmigen Elements mit einer Flüssigkeitsoberfläche des in dem Kraftstofftank aufgenommenen Kraftstoffs aufgrund eines Aufblasens und Entleerens des beutelförmigen Elements entsprechend einer Höhe der Flüssigkeitsoberfläche beibehalten wird; einen Temperatursensor, der eine Temperatur des Kraftstoffs oder des verdunsteten Kraftstoffs in dem Kraftstofftank erfasst; und einen Kühlwindeinlassabschnitt, über den in einem Fall, in dem die von dem Temperatursensor erfasste Temperatur des Kraftstoffs oder des verdunsteten Kraftstoffs höher ist als eine vorbestimmte Temperatur, Kühlwind in ein Inneres des beutelförmigen Elements eingeführt wird.

### Zusammenfassung der Erfindung

Es ist eine Aufgabe der Erfindung, ein Hybridfahrzeug mit einer Tankvorrichtung anzugeben, wobei das Hybridfahrzeug auch rein elektrisch betrieben werden kann und der Tank kostengünstig gegen Beschädigungen durch Überdruck geschützt ist.

Die Lösung der Aufgabe erfolgt durch ein Hybridfahrzeug mit einer Tankvorrichtung mit den Merkmalen gemäß Anspruch 1.

Dabei umfasst das Hybridfahrzeug einen elektrischen Antrieb mit einem Energiespeicher für den elektrischen Antrieb, sowie einen Verbrennungsmotor, wobei die Tankvorrichtung einen Tank zur Speicherung des Kraftstoffs für den Verbrennungsmotor umfasst, wobei das Hybridfahrzeug einen Kühlkreislauf mit einem zirkulierenden Kühlmedium umfasst, wobei der Kühlkreislauf so ausgebildet ist, dass der Energiespeicher durch das Kühlmedium im Kühlkreislauf gekühlt werden kann, wobei der Kühlkreislauf durch den Tank verläuft, so dass der Kraftstoff im Tank durch das Kühlmedium im Kühlkreislauf gekühlt werden kann.

Erfindungsgemäß verfügt ein Hybridfahrzeug über einen Kühlkreislauf, wobei in dem Kühlkreislauf ein Kühlmittel zirkuliert. Durch den Kühlkreislauf und durch das Kühlmittel wird der Energiespeicher, also die Batterie, des elektrischen Antriebs gekühlt. Der selbe Kühlkreislauf der zur Kühlung des Energiespeichers des elektrischen Antriebs eingerichtet ist, wird erfindungsgemäß auch zur Kühlung des Tanks für den Kraftstoff verwendet. Der selbe Kühlkreislauf verläuft daher auch durch den Tank, so dass der Tank durch das Kühlmedium gekühlt werden kann. Die Temperatur im Kraftstoff-Tank und hierdurch der Druck im Tank wird hierdurch gering gehalten. Zusätzliche Versteifungen oder Verstärkungen des Tanks sind hierdurch nicht erforderlich, so dass die Tankvorrichtung kostengünstig gefertigt werden kann.

Erfindungsgemäß umfasst das Hybridfahrzeug eine Steuereinheit, wobei durch die Steuereinheit wahlweise das Kühlmedium durch den Kühlkreislauf im Tank geleitet wird oder nicht, so dass der Kraftstoff im Tank durch das Kühlmedium im Kühlkreislauf gekühlt wird oder nicht. Hierzu kann bevorzugt durch die Steuereinheit ein Ventil angesteuert werden und insbesondere geöffnet oder geschlossen oder optional teilweise geöffnet werden, um das Kühlmedium durch den Tank fließen zu lassen oder nicht.

Im Tank ist erfindungsgemäß ein Temperatursensor und/oder ein Drucksensor angeordnet und die Steuereinheit ist erfindungsgemäß dazu eingerichtet, das Kühlmedium durch den Kühlkreislauf im Tank zu leiten, wenn die Temperatur am Temperatursensor und/oder der Druck am Drucksensor jeweils vorgegebene Grenzwerte überschreiten. Hierdurch kann der Tank über den Kühlkreislauf des Energiespeichers bei Bedarf gekühlt werden.

Erfindungsgemäß wird das Kühlmedium im Kühlkreislauf durch einen Kältemittelkreislauf einer Klimaanlage gekühlt. Der Kältemittelkreislauf umfasst einen Kältemittelkompressor, wobei der Kältemittelkompressor auch betrieben werden kann, wenn der Verbrennungsmotor nicht in Betrieb ist.

Weiterbildungen der Erfindung sind in den abhängigen Ansprüchen, der Beschreibung sowie den beigefügten Zeichnungen angegeben.

Bevorzugt ist im Tank eine Kühlspirale angeordnet und der Kühlkreislauf verläuft durch die Kühlspirale durch den Tank.

Bevorzugt wird das Kühlmedium im Kühlkreislauf durch einen Kältemittel-Kühlmedium-Wärmeübertrager, also einen sogenannten "Chiller", gekühlt.

Bevorzugt weist der Tank einen Druckausgleichsbehälter auf. Durch den Druckausgleichsbehälter kann ein Überdruck im Tank aufgenommen werden.

Der Druckausgleichsbehälter ist vorzugsweise mittels einer Membran in einen dem Tank zugewandten Teil und einen vom Tank abgewandten Teil abgeteilt. Auf der dem Tank abgewandten Seite der Membran ist der Druckausgleichsbehälter bevorzugt durch ein Gas, wie Stickstoff, mit Druck beaufschlagt. Der Druck auf dieser Seite des Druckausgleichsbehälters entspricht bevorzugt mindestens dem hydrostatischen Druck im Einfüllrohr, also dem Ergebnis der Formel ρ*g*h, wobei h die Höhe des Einfüllrohres ist, g die Schwerebeschleunigung ca. 9,81 m/s² und ρ die Dichte des Mediums. Bei einer Höhe des Einfüllrohres von 0,7 m und einer Dichte des Mediums Benzin von 775 kg/m3 ergibt dies beispielsweise einen Druck von mindestens 53,2 mbar.

Vorzugsweise weist der Tank eine Isolierung als Ummantelung auf, um eine Erwärmung des Tankinhalts durch Umgebungswärme zu verhindern. Bevorzugt wird der Energiespeicher durch den Kühlkreislauf auf eine Temperatur von etwa 15 bis 35 Grad Celsius gekühlt.

Der Tank ist bevorzugt im Kühlkreislauf vor oder nach dem Kältemittel-Kühlmedium-Wärmeübertrager angeordnet.

Der Tank ist vorzugsweise über ein Ventil, insbesondere ein Niederdruckventil, mit der Atmosphäre verbunden, wobei das Ventil bevorzugt vor oder nach einem Aktivkohlefilter angeordnet ist. Das Ventil ist bevorzugt bei einem rein elektrischen Betrieb des Hybridfahrzeugs geschlossen.

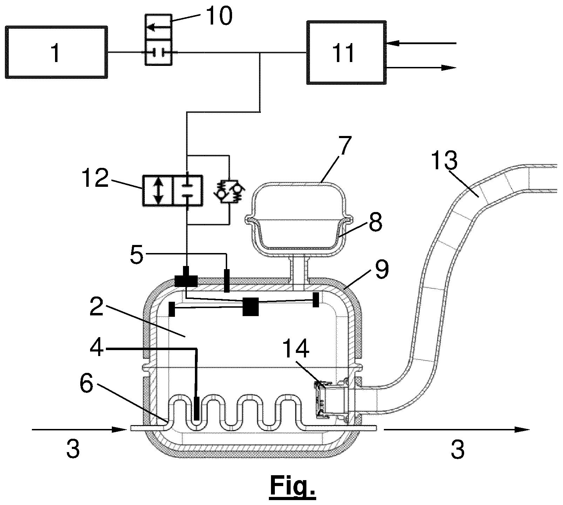

### Kurzbeschreibung der Zeichnung

Die Erfindung wird im Folgenden beispielhaft unter Bezugnahme auf die Zeichnung beschrieben.
- Fig.: ist eine schematische Schnittansicht einer Tankvorrichtung eines erfindungsgemäßen Hybridfahrzeugs.

### Detaillierte Beschreibung der Erfindung

In der Fig. sind wesentliche Teile eines erfindungsgemäßen Hybridfahrzeugs, wie insbesondere dessen Tankvorrichtung, schematisch dargestellt.

Das Hybridfahrzeug umfasst einen Verbrennungsmotor 1, der über einen Tank 2 mit Kraftstoff versorgt werden kann. Der Verbrennungsmotor 1 ist über ein Spülventil 10 mit einem Aktivkohlefilter 11 verbunden. Zwischen dem Aktivkohlefilter 11 und dem Tank 2 ist ferner ein Niederdruckventil 12 angeordnet.

Im Tank 2 ist eine Kühlspirale 6 angeordnet, so dass das Kühlmedium eines in der Fig. schematisch als Pfeile dargestellten Kühlkreislaufs 3, zur Kühlung des Energiespeichers des elektrischen Antriebs, auch durch die Kühlspirale 6 und somit durch den Tank 2 verläuft, um den Tank 2 zu kühlen.

Der Tank 2 wird über ein Einfüllrohr 13 befüllt, an dessen unterem Ende ein Einlassrückschlagventil 14 angeordnet ist.

Das Hybridfahrzeug umfasst eine in Fig. nicht dargestellte Steuereinheit, wobei durch die Steuereinheit wahlweise das Kühlmedium durch die Kühlspirale 6 im Tank 2 geleitet wird oder nicht, so dass der Kraftstoff im Tank 2 durch das Kühlmedium im Kühlkreislauf 3 gekühlt wird oder nicht. Die Steuereinheit steuert dazu ein geeignetes Absperrventil an.

Im Tank 2 ist ein Temperatursensor 4 und ein Drucksensor 5 angeordnet. Die Steuereinheit ist dazu eingerichtet, das Kühlmedium durch die Kühlspirale 6 im Tank 2 zu leiten, wenn die Temperatur am Temperatursensor 4 und/oder der Druck am Drucksensor 5 jeweils vorgegebene Grenzwerte überschreiten.

Das Kühlmedium im Kühlkreislauf 3 kann durch einen Kältemittelkreislauf einer Klimaanlage gekühlt werden, insbesondere durch einen Kältemittel-Kühlmedium-Wärmeübertrager, also einen sogenannten "Chiller".

Der Tank 2 weist einen Druckausgleichsbehälter 7 auf, der durch eine Membran 8, insbesondere durch eine Sackmembran, in einen dem Tank 2 zugewandten Teil und einen vom Tank 2 abgewandten Teil horizontal abgeteilt ist. Auf der dem Tank 2 abgewandten Seite der Membran 8 befindet sich Stickstoff, N2, im Druckausgleichsbehälter 7, mit einem Druck von beispielsweise mindestens 40 mbar - abhängig von der Höhe des Einfüllrohrs 13.

Ferner weist der Tank 2 eine Isolierung 9 als Ummantelung auf, um eine Erwärmung des Tankinhalts durch Umgebungswärme zu verhindern.

Durch diese Maßnahmen ist der Tank vor der Entstehung eines Überdrucks durch das Ausgasen des Kraftstoffs geschützt. Teure Verstärkungsmaßnahmen des Tanks sind daher nicht erforderlich.

### Bezugszeichenliste

- 1: Verbrennungsmotor
- 2: Tank
- 3: Kühlkreislauf
- 4: Temperatursensor
- 5: Drucksensor
- 6: Kühlspirale
- 7: Druckausgleichsbehälter
- 8: Membran
- 9: Isolierung
- 10: Spülventil
- 11: Aktivkohlefilter
- 12: Niederdruckventil
- 13: Einfüllrohr
- 14: Einlassrückschlagventil

## Patentansprüche

1. Hybridfahrzeug mit einer Tankvorrichtung, wobei das Hybridfahrzeug einen elektrischen Antrieb mit einem Energiespeicher für den elektrischen Antrieb umfasst, sowie einen Verbrennungsmotor (1), wobei die Tankvorrichtung einen Tank (2) zur Speicherung des Kraftstoffs für den Verbrennungsmotor (1) umfasst, wobei das Hybridfahrzeug einen Kühlkreislauf (3) mit einem zirkulierenden Kühlmedium umfasst, wobei der Kühlkreislauf (3) so ausgebildet ist, dass der Energiespeicher durch das Kühlmedium im Kühlkreislauf (3) gekühlt werden kann,
wobei der Kühlkreislauf (3) durch den Tank (2) verläuft, so dass der Kraftstoff im Tank (2) durch das Kühlmedium im Kühlkreislauf gekühlt werden kann, **dadurch gekennzeich** - **net**, dass das Hybridfahrzeug eine Steuereinheit umfasst, wobei durch die Steuereinheit wahlweise das Kühlmedium durch den Kühlkreislauf (3) im Tank (2) geleitet wird oder nicht, so dass der Kraftstoff im Tank (2) durch das Kühlmedium im Kühlkreislauf (3) gekühlt wird oder nicht, wobei im Tank (2) ein Temperatursensor (4) und/oder ein Drucksensor (5) angeordnet ist und die Steuereinheit dazu eingerichtet ist, das Kühlmedium durch den Kühlkreislauf (3) im Tank (2) zu leiten, wenn die Temperatur am Temperatursensor (4) und/oder der Druck am Drucksensor (5) jeweils vorgegebene Grenzwerte überschreiten, wobei das Kühlmedium im Kühlkreislauf (3) durch einen Kältemittelkreislauf einer Klimaanlage gekühlt wird, wobei der Kältemittelkreislauf einen Kältemittelkompressor umfasst, wobei der Kältemittelkompressor auch betrieben werden kann, wenn der Verbrennungsmotor (1) nicht in Betrieb ist.

2. Hybridfahrzeug nach Anspruch 1,
**dadurch gekennzeichnet , dass** das Kühlmedium im Kühlkreislauf (3) durch einen Kältemittelkreislauf einer Klimaanlage gekühlt wird, nämlich durch einen Kältemittel-Kühlmedium-Wärmeübertrager.

3. Hybridfahrzeug nach zumindest einem der vorhergehenden Ansprüche,
**dadurch gekennzeichnet , dass** im Tank (2) eine Kühlspirale (6) angeordnet ist und der Kühlkreislauf (3) durch die Kühlspirale (6) durch den Tank (2) verläuft.

4. Hybridfahrzeug nach zumindest einem der vorhergehenden Ansprüche,
**dadurch gekennzeichnet , dass** der Tank (2) einen Druckausgleichsbehälter (7) aufweist.

5. Hybridfahrzeug nach Anspruch 4,
**dadurch gekennzeichnet , dass** der Druckausgleichsbehälter (7) mittels einer Membran (8) in einen dem Tank (2) zugewandten Teil und einen vom Tank (2) abgewandten Teil abgeteilt ist, wobei der Druckausgleichsbehälter (7) auf der dem Tank (2) abgewandten Seite der Membran (8) durch ein Gas mit Druck beaufschlagt ist, insbesondere mit einem Druck der mindestens dem hydrostatischen Druck in einem Einfüllrohr (13) des Tanks (2) entspricht.

6. Hybridfahrzeug nach zumindest einem der vorhergehenden Ansprüche,
**dadurch gekennzeichnet , dass** der Tank (2) eine Isolierung (9) als Ummantelung aufweist, um eine Erwärmung des Tankinhalts durch Umgebungswärme zu verhindern.

## Claims

1. Hybrid vehicle having a tank device, wherein the hybrid vehicle comprises an electric drive with an energy storage device for the electric drive, and an internal combustion engine (1), wherein the tank device comprises a tank (2) for storing the fuel for the internal combustion engine (1), wherein the hybrid vehicle comprises a cooling circuit (3) with a circulating cooling medium, wherein the cooling circuit (3) is designed in such a way that the energy storage device can be cooled by the cooling medium in the cooling circuit (3),
wherein the cooling circuit (3) runs through the tank (2), thus enabling the fuel in the tank (2) to be cooled by the cooling medium in the cooling circuit, **characterized in that** the hybrid vehicle comprises a control unit, wherein the control unit selectively passes the cooling medium through the cooling circuit (3) in the tank (2) or not, with the result that the fuel in the tank (2) is cooled or not by the cooling medium in the cooling circuit (3), wherein a temperature sensor (4) and/or a pressure sensor (5) is arranged in the tank (2), and the control unit is configured to pass the cooling medium through the cooling circuit (3) in the tank (2) if the temperature at the temperature sensor (4) and/or the pressure at the pressure sensor (5) in each case exceed/s predetermined limit values, wherein the cooling medium in the cooling circuit (3) is cooled by a refrigerant circuit of an air-conditioning system, wherein the refrigerant circuit comprises a refrigerant compressor, wherein the refrigerant compressor can also be operated when the internal combustion engine is not in operation.

2. Hybrid vehicle according toClaim 1,
**characterized in that** the cooling medium in the cooling circuit (3) is cooled by a refrigerant circuit of an air-conditioning system, in particular by a refrigerant-cooling medium heat exchanger.

3. Hybrid vehicle according to at least one of the preceding claims,
**characterized in that** a cooling coil (6) is arranged in the tank (2), and the cooling circuit (3) runs through the cooling coil (6) through the tank (2).

4. Hybrid vehicle according to at least one of the preceding claims,
**characterized in that** the tank (2) has a pressure compensation vessel (7).

5. Hybrid vehicle according to Claim 4,
**characterized in that** the pressure compensation vessel (7) is divided by means of a diaphragm (8) into a part facing the tank (2) and a part facing away from the tank (2), wherein the pressure compensation vessel (7) is subjected to pressure on the side of the diaphragm (8) facing away from the tank (2) by a gas, in particular with a pressure which corresponds at least to the hydrostatic pressure in a filling tube (13) of the tank (2).

6. Hybrid vehicle according to at least one of the preceding claims,
**characterized in that** the tank (2) has insulation (9) as a jacket in order to prevent heating of the tank contents by ambient heat.

## Revendications

1. Véhicule hybride doté d'un dispositif de réservoir, dans lequel le véhicule hybride comprend un entraînement électrique doté d'un accumulateur d'énergie pour l'entraînement électrique, ainsi d'un moteur thermique (1), dans lequel le dispositif de réservoir comprend un réservoir (2) pour stocker le carburant destiné au moteur thermique (1), dans lequel le véhicule hybride comprend un circuit de refroidissement (3) avec un agent de refroidissement qui circule, dans lequel le circuit de refroidissement (3) est réalisé de telle sorte que l'accumulateur d'énergie peut être refroidi par l'agent de refroidissement dans le circuit de refroidissement (3),
dans lequel le circuit de refroidissement (3) passe par le réservoir (2) de sorte que le carburant dans le réservoir (2) peut être refroidi par l'agent de refroidissement dans le circuit de refroidissement,
**caractérisé en ce que** le véhicule hybride comprend une unité de commande, dans lequel l'unité de commande dirige ou non sélectivement l'agent de refroidissement à travers le circuit de refroidissement (3) dans le réservoir (2) de sorte que le carburant dans le réservoir (2) est refroidi ou non par l'agent de refroidissement dans le circuit de refroidissement (3), dans lequel un capteur de température (4) et/ou un capteur de pression (5) est/sont disposé(s) dans le réservoir (2), et l'unité de commande est conçue pour diriger l'agent de refroidissement à travers le circuit de refroidissement (3) dans le réservoir (2) si la température au niveau du capteur de température (4) et/ou la pression au niveau du capteur de pression (5) dépassent des valeurs limites prédéfinies respectivement, dans lequel l'agent de refroidissement dans le circuit de refroidissement (3) est refroidi par un circuit de fluide frigorigène d'un système de climatisation, dans lequel le circuit de fluide frigorigène comprend un compresseur de fluide frigorigène, dans lequel le compresseur de fluide frigorigène peut aussi fonctionner si le moteur thermique (1) ne fonctionne pas.

2. Véhicule hybride selon la revendication 1, **caractérisé en ce que** l'agent de refroidissement dans le circuit de refroidissement (3) est refroidi par un circuit de fluide frigorigène d'un système de climatisation, notamment par un échangeur thermique fluide frigorigène/ agent de refroidissement.

3. Véhicule hybride selon au moins l'une des revendications précédentes, **caractérisé en ce qu'**un serpentin de réfrigération (6) est disposé dans le réservoir (2), et le circuit de refroidissement (3) passe par le serpentin de réfrigération (6) à travers le réservoir (2).

4. Véhicule hybride selon au moins l'une des revendications précédentes, **caractérisé en ce que** le réservoir (2) présente un réservoir de compensation de pression (7).

5. Véhicule hybride selon la revendication 4, **caractérisé en ce que** le réservoir de compensation de pression (7) est cloisonné au moyen d'une membrane (8) en une partie tournée vers le réservoir (2) et une partie détournée du réservoir (2), dans lequel le réservoir de compensation de pression (7) est mis sous pression par un gaz sur la face, détournée du réservoir (2), de la membrane (8), en particulier sous une pression qui correspond au moins à la pression hydrostatique dans une tubulure de remplissage (13) du réservoir (2).

6. Véhicule hybride selon au moins l'une des revendications précédentes, **caractérisé en ce que** le réservoir (2) présente une isolation (9) comme enveloppe afin d'empêcher un réchauffement du contenu du réservoir par la chaleur ambiante.
